Europäisches Patentamt

(19) European Patent Office

Office européen des brevets

(11) Publication number: **0 017 318**

**A1**

## (12) EUROPEAN PATENT APPLICATION

(21) Application number: 80300394.6

(22) Date of filing: 11.02.80

(51) Int. Cl.³: **H 03 K 17/96**
**A 61 C 1/00, H 05 B 37/02**

(30) Priority: 12.02.79 US 11433
04.02.80 US 8000018

(43) Date of publication of application:
15.10.80 Bulletin 80/21

(84) Designated Contracting States:
BE IT

(71) Applicant: AMERICAN HOSPITAL SUPPLY
CORPORATION
One American Plaza
Evanston, IL 60201(US)

(72) Inventor: Johnson, Clifford C.
12 South Prinale
Arlington Heights Illinois 60004(US)

(72) Inventor: Jourdan, Robert M.
22 W. 301 Ahlstrand
Glen Ellyn Illinois 60137(US)

(72) Inventor: Chan, Patrick Siu-Tat
121 Peakview drive
Henrietta New York 14467(US)

(74) Representative: Baker, Arthur et al,
c/o EDWARD EVANS & CO. Chancery House 53-64
Chancery Lane
London WC2A 1SD(GB)

(54) Capacitive switching circuit for energizing remote controlled device.

(57) The casing (12A) of a hand-held instrument (12) provides a contact surface for a capacitive switching circuit for energizing a controlled device (63). The switching circuit and device are remote from the contact area. The switching circuit includes an input circuit (80) incorporating the body capacitance ($C_B$) and a variable capacitor (81) which is adjusted to balance the circuit in the presence of only stray capacitance ($C_E$) without body capacitance so that the switching circuit remains unactuated. The addition of body capacitance will actuate the switching circuit. In the illustrated embodiment, the input circuit (80) is energized by a periodic signal. An output signal is coupled from the switching circuit to the controlled device through a delay off circuit (88) which has a delay time longer than the period of the periodic signal so that if contact with the instrument is lost momentarily, there is no interruption in the controlled function. This is particularly advantageous in the case of a medical device or dental handpiece where light from a high intensity source is coupled back to the instrument for illuminating the work area.

./...

Fig. 2

Fig. 7

- 1 -

## CAPACITIVE SWITCHING CIRCUIT FOR
## ENERGIZING REMOTE CONTROLLED DEVICE

### Background and Summary

The present invention relates, in general, to capacitive switches. Such devices are known in the art. In general, a capacitive switch is responsive to contact by the skin of a person or animal for switching an electrical circuit. Such switches are in common use in elevators, for example.

In most cases where a capacitive switch is used, the switching circuit may be located immediately adjacent any contact or sensor area (that is, the area which, if touched, will add body capacitance to a circuit and cause it to generate a control signal). However, a special problem is presented in the case of hand-held instruments, such as are in common use in the medical and dental fields. That is, in the case of a dental handpiece (or medical instrument, tool or probe), it is highly desirable to avoid having any voltage present in the handpiece which, if a short occurred, could cause a shock in the patient. Further, most dental handpieces or medical instruments are highly compact to begin with, and the addition of any circuitry to the instrument could only add bulk to the design and reduce mobility. Still further, in the case of the preferred embodiment of the present invention, it is desirable to incorporate the controlled function into a dental handpiece as an option to be selected by the practitioner.

That is to say, the illustrated embodiment includes a capacitive switching circuit which cooperates with a dental handpiece, the casing of the handpiece serving as the contact or sensor area which, if touched by a person, will actuate the capacitive switch. The capacitive switch, in turn, turns on a high intensity light source, the output of which is coupled through a fiber optic bundle back to the handpiece to illuminate the work area of the dentist. The dental handpiece is coupled to a console or the like through a conventional umbilical cord, and the high intensity light source is located at the console. Since it is desirable not to have any voltage present in the handpiece which could cause a shock to the patient, the control circuitry is also located in the console, and this requires that the contact area of the handpiece be connected to the remote switching circuit by means of an electrical conductor, which is referred to as a capacitive cable. Since it is desirable to provide umbilical cords of different lengths, both to accommodate an individual dentist's needs and to use the system for retrofitting dental consoles, the length of the capacitive cable may vary. Adding to this variable is the effect on the stray capacitance of the cable and the body capacitance of the dentist due to environmental parameters, such as the type of floor covering, the relative humidity of the office, and so on.

The capacitive switching circuit of the present invention incorporates the stray capacitances with an adjustable capacitance in an input circuit. The variable capacitance enables one to "tune" or balance the input circuit in the actual environment in which the instrument will be used, and with the capacitive cable with which it will be used, so that the switching circuit will not be energized for a given environmental and stray capacitance and a given length of umbilical cord and capacitance cable. However, when a person touches the sensor area of the handpiece, the input circuit becomes unbalanced, and the switching circuit is triggered to energize the filament of a high intensity incandescent lamp for transmitting light through the fiber optic bundle back to the work area.

The output signal of the switching circuit is coupled through an output monostable circuit which delays de-actuation of the lamp for a predetermined time period, of the order of one-two seconds. This has the advantage of avoiding flicker should the dentist change hands with the instrument or pass it to another person. It further prolongs the life of the high intensity lamp by avoiding thermal shock to the filament in such situations.

Other features and advantages of the present invention will be apparent to persons skilled in the art from the following detailed description of a preferred embodiment accompanied by the

- 3 -

attached drawing wherein identical reference numerals will refer to like parts in the various views.

## The Drawing

FIG. 1 is a perspective view of an installation incorporating the present invention, such as might be used in a dentist's office;

FIG. 2 is a close-up perspective view of the major components of a system for incorporating the present invention in a dental handpiece;

FIG. 3 is a cross sectional view of the umbilical cord of FIG. 2;

FIG. 4 is a front view of the Remote Control Unit of FIG. 2;

FIG. 5 is a front view of the light box of FIG. 2;

FIG. 6 is an electrical schematic diagram showing the connections between the handpiece, the light box, the remote switching circuit, and the Remote Control Unit of FIG. 2; and

FIG. 7 is a circuit schematic diagram of the automatic switching control circuit of FIG. 2.

## Detailed Description

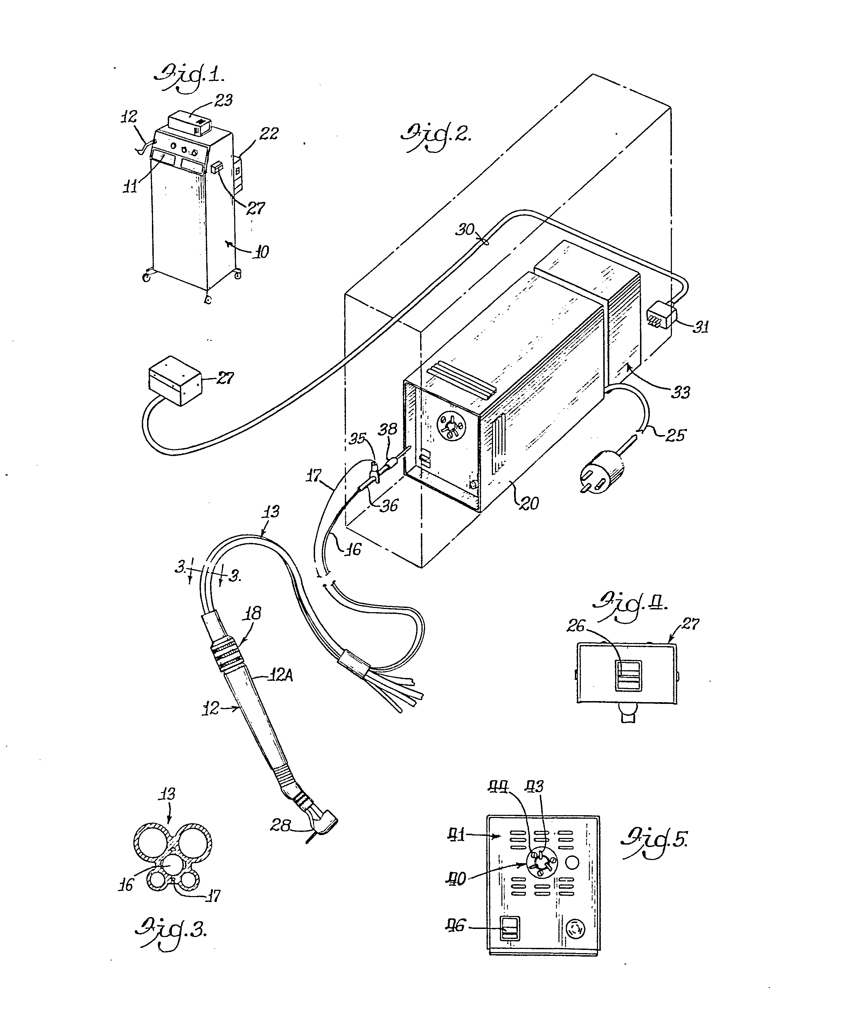

Referring first to FIG. 1, reference numeral 10 generally designates a dental console which, in this illustration, is portable. Persons skilled in the art will readily appreciate that the present invention is adaptable to many other types of dental consoles, and in fact, it is not limited to use in combination with dental handpieces or tools, although it is highly advantageous in this application. Rather, the invention has a much broader

- 4 -

applicability in situations where the switching circuitry and the controlled device actuated by a contact switch have to be located in a remote location from the contact area.

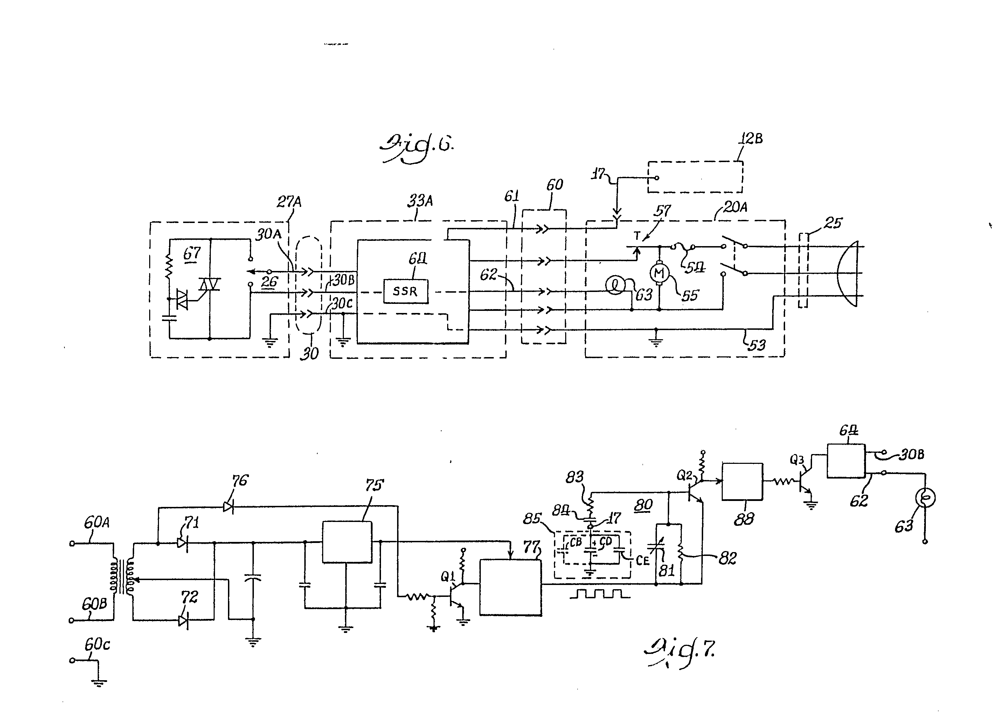

Returning, then, to FIG. 1, the upper portion of the console 10 includes a control panel 11 in which the various controls and displays, if any, are mounted. Further, one or more tools or work pieces, such as a dental handpiece 12 may be mounted on the control panel 11, and provided with a retractable umbilical cord (designated 13 in FIG. 2).

The umbilical cord 13 contains the conventional conduits for the drive air for the handpiece (if it is an air-bearing type), the chip air, water and exhaust. These are seen in cross section in FIG 3. In addition, the umbilical cord 13 includes a centrally located fiber optic light bundle 16, and a capacitance cable 17, both of which are enclosed within the protective sheathing of the umbilical cord.

Returning to FIG. 2, the handpiece 12 may be removably attached to the umbilical cord by means of a connector 18. Still referring to FIG. 2, the fiber optic bundle 16 is connected to a light box 20 which contains a conventional high intensity incandescent lamp, such as are used in movie projectors.

The light box 20 may be solidly mounted to the rear of the console 10 as seen at 22 in FIG. 1, or it may be free standing and simply rest on the top of the console, as seen at 23. It includes an electric cord 25 which is adapted to be connected to a conventional wall outlet.

A switch (see 26 in FIG. 4) is housed in a Remote Control Unit 27 which may be mounted to the console 10 or in any other location which is accessible to the dentist or his assistants. The switch 26 controls the intensity of the light in the light box; and the light output from the source is coupled through the fiber optic bundle 16 into the dental handpiece, and it exits at a location such as that designated 28 in FIG. 2 for illuminating the work area of the dentist.

Still referring to FIG. 2, the Remote Control Unit 27 is connected to the light box by means of a cable 30 and a plug 31.

- 5 -

In the case where it is desired to incorporate the present invention, an automatic switching control module or unit generally designated 33 is attached to the rear of the light box 20 and includes a receptacle for the plug 31. The function of the switching control circuit housed in the module 33 is to energize the light source in the box 20 whenever the handpiece 12 is touched by a person. The light source will be energized according to the setting of the switch 26 on the Remote Control Unit 27, and the light will be coupled through the fiber optic bundle 16 to illuminate the work area.

In order to accomplish this, the capacitance cable 17 is connected at one end to the metal casing 12A of the handpiece 12. The capacitance cable is then routed through the umbilical cord 13 and connected by means of a speed clip 35 to a coiled spring conductor 36 which is fitted around the source end of the fiber optic bundle 16. This reduces strain on the connection as the cord is twisted in use. One end of the spring 36 is attached to a bushing 38 which is received in one of three ports of a three-port bundle receptacle generally designated by reference numeral 40 in FIG. 5 and located on the front panel 41 of the light box 20. The receptacle 40 is metallic and electrically insulated from the light box itself; and it includes three separate ports to accommodate up to three individual fiber optic bundles, if desired. If a port is not in use, it is shut with a plug in the form of an L, such as that designated 43 in FIG. 5. Each port has associated with it a set screw such as that designated 44 which is adapted to set against the bushing 38 on the removable end of the fiber optic bundle, thereby establishing electrical continuity between the metal casing of the handpiece and the circuitry of the light box. A connection is then made inside the light box 20 from the receptacle 40 to the module 33 which houses the switching circuitry to be described presently. Thus, the light box, fiber optic bundle and Remote Control Unit and switch may be used without the touch-actuated switching circuitry to be described, simply by removing the module 33 and inserting the plug 31 into a corresponding receptacle at the back of the light box 20. A power switch 46 is located on the front panel of the light box 20, as best seen in FIG. 5.

Turning now to FIG. 6, the components of the light box are shown in electrical schematic form within the dashed line 20A. The handpiece is diagrammatically represented by the block 12B. The remote switching circuit is diagrammatically represented within the block 33A, and the Remote Control Unit circuitry is enclosed within the dashed block 27A.

In particular, the leads from the wall plug, comprising the cord 25 include a "hot" lead, 51, a neutral lead 52, and a ground lead 53. The leads 51, 52 are connected to the power switch 46 which may be a double pole, double throw switch as illustrated. A fuse 53 is connected in the hot lead, and a fan motor 55 is connected across the power leads. A thermal protector 57 for the light box may also be included. The hot, neutral and ground leads are coupled through a plus 60 to the switching circuit module 33A. The capacitive lead 17 is also connected from the handpiece through the light box in the manner described, and the plug 60 to the switching module via a lead 61. Further, a lead 62 is connected through the plug 60 from the switching circuit module to the filament of the high intensity lamp 63.

The output stage of the switching circuit includes a solid state relay (SSR) shown at 64 for energizing the lamp 63 depending on the state of the switch 26 of the Remote Control Unit. The cable 30 between the switching circuit and the Remote Control Unit includes the hot lead and the ground lead, and a wire labeled "IN". The hot lead is connected to the movable contact of a two-position switch (see switch 26 in FIG. 4), the positions of which are designated LOW and HIGH. A conventional triac triggering circuit 67 is interposed between the hot line and the IN lead to the solid state relay 64 when the switch 26 is in the LOW position (indicating low intensity), and the hot lead is directly connected to the IN lead when the switch 26 is in the HIGH position, thereby providing a higher voltage to the filament of the lamp 63.

Turning now to FIG. 7, the hot, neutral and ground leads from the plug 60 are designated respectively 60A, 60B, and 60C. The

hot and neutral leads are connected to the primary winding of a transformer 70, the secondary of which has a grounded center tap and feeds a full-wave rectifier comprising diodes 71, 72, the cathodes of which are connected in common to feed a conventional DC voltage regulator circuit 75 which generates a regulated five volt DC level for powering the remainder of the circuitry.

One terminal of the secondary of transformer 70 is also connected through a diode 76 which acts as a half wave rectifier and is coupled to the base of a transistor Q1, the collector of which is coupled to the input of a pulse shaping circuit 77. The pulse shaping circuit 77 may be a monostable circuit which generates an output pulse near each positive-going zero crossing of the input 60 Hz signal. The width of the output pulse from the circuit 70 is approximately equal to one half the period of the 60 Hz signal so that the output of the pulse shaping circuit 77 is effectively a 60 Hz square wave which energizes an input circuit generally designated by reference numeral 80 of the switching circuit.

The input circuit 80 includes a variable capacitor 81 connected in parallel with a resistor 82 between the output of the pulse shaping circuit 77 and the base (control lead) of a transistor Q2 (solid state switch). The base of the transistor Q2 is also connected through a resistor 83 and a coupling capacitor 84 to the external capacitance diagrammatically illustrated in schematic form within the dashed block 85, and including for purposes of explanation, three capacitive elements, $C_B$, $C_D$ and $C_E$. Capacitances $C_D$ and $C_E$ comprise stray capacitance attributable respectively to the length and nature of the capacitance cable 17 (which may be braided stainless steel) and environmental factors. The latter may include not only any effects due to relative humidity but also, for example, to the type of floor covering that is used. The capacitance $C_B$ is the body capacitance added by the dentist when he touches the contact area of the handpiece, and this unbalances the input circuit and causes the switching circuit to switch.

The coupling capacitor 84 has a relatively large value as compared with the stray capacitance and the body capacitance just

- 8 -

discussed, so it provides a relatively low impedance and has no substantial effect on the circuit other than to insure DC isolation of the handpiece and any patient contact area from the remainder of the circuitry. Resistor 83 is also in series with the contact area and the coupling capacitor, and acts as a current limit resistor.

The input circuit thus contains one impedance branch including variable capacitor 81, and another impedance branch including stray capacitance and the body capacitance of the user.

To set up the system for operation, the dental handpiece is first set aside so that it is not touched by anyone and is isolated from ground. The pulse shaping circuit 77 generates a 60 Hz square wave at the emitter of Q2. Originally, the variable capacitor 81 is set at a low capacitance setting (it may, for example, be a variable capacitor having a continuously variable range between 180 and 680 pf). At this small setting, as will be described presently, the light source will be actuated. The adjustment is made by a small set screw on the switching circuit module 33. Without anyone touching the handpiece, the value of the variable capacitor 81 is increased until the light goes out, and in order to establish a reliable threshold, the capacitance is increased slightly beyond that point. When body capacitance $C_B$ is added to the input circuit as illustrated, it unbalances this setting; and the light will then be energized for so long as body capacitance is present.

In operation of this circuit, the transistor Q2 conducts to generate a control signal whenever body capacitance is present in the input circuit. The periodic output signal of the pulse shaping circuit 77 goes between ground and +5 v. When the output of a pulse shaping circuit 77 goes to +5 v., the transistor Q2 is always turned off. However, the stray capacitance ($C_D$ and $C_E$) is permitted to charge through resistor 82 in the polarity illustrated. When the output of the pulse shaping circuit 77 returns to ground, the variable capacitor 81 presents a low impedance to the charge stored in the stray capacitance, and there is insufficient stored charge to cause transistor Q2 to conduct. However, if body capacitance $C_B$ is added to the circuit as illustrated, when the output of the pulse shaping circuit 77 goes positive, the body capacitance is also charged; and when the periodic energizing signal then returns to ground, there is sufficient charge stored to cause the transistor Q2 to conduct. In summary, the input circuit is energized with a periodic signal; and, in the absence of body capacitance at the contact area, no output or control signal is generated. The input circuit, on the other hand, is responsive to the presence of body capacitance to cause the transistor Q2 to conduct to generate a periodic control signal in synchronism with the output of the 60 Hz source near zero crossings to reduce radio frequency interference.

The collector of transistor Q2 is connected to the input of a delay off monostable circuit 88, the output of which is connected to the base of a transistor Q3. The output of Q3 drives the previously described solid state relay 64 which, in the presence of an input signal, couples the terminal 30B labeled IN with the output terminal 62 labeled OUT (see the correspondingly labeled leads in FIG. 6).

The delay off time of the monostable circuit 88 is preferably set to be of the other of 1-2 seconds so that even if transistor Q2 does not conduct during that time (indicating an intermittency in the presence of body capacitance which may be caused, for example, by passing the handpiece from one hand to the other or giving it to another person), the output of monostable circuit 88 remains on to cause transistor Q3 to conduct. In addition to avoiding flickering of the light caused by a brief intermittency in the presence of body capacitance, which might be disturbing to the dentist, this has the advantage of maintaining the filament of the lamp 63 continuously energizing during such intermittencies, thereby prolonging its useful life.

It will thus be appreciated that the present invention has particular advantages in actuating a controlled device wherein the switching circuit associated with a contact area for a capacitive switch is located remotely from the contact area itself. In this regard, the variable capacitor 81 in the input circuit of the switching circuit is adjusted so that stray capacitance alone will not cause the circuit to switch. The input circuit is energized with a periodic input signal (namely, the output of pulse shaping circuit 77). In the presence of body capacitance, however, the input circuit does generate a periodic control signal in synchronism with the energizing signal, and this is coupled to the monostable circuit 88 which, in turn, actuates the solid state relay 64 to energize the controlled device--namely, the lamp 63 in this embodiment. The monostable circuit 88 is re-triggerable--that is, each time it is triggered as the transistor Q2 conducts, the period during which its output signal remains high is reset; and the period of its output signal is normally longer than the periodic control signal from the input circuit 80.

Having thus disclosed in detail a preferred embodiment of the invention, persons skilled in the art will be able to modify certain of the structure which has been disclosed and to substitute equivalent elements for those illustrated while continuing to practice the principle of the invention; and it is, therefore, intended that all such modifications and substitutions be covered as they are embraced within the spirit and scope of the appended claims.

## The Claims

1.    In combination with an instrument having a conductive contact surface and adapted to be held in the hand of a person during use, a capacitive switching circuit located remotely from said instrument for energizing a controlled device in response to the touching of said instrument by a person; and conductive lead means connected between said contact surface and said switching circuit and having stray capacitance associated with it; said switching circuit comprising input circuit means for generating a control signal when said person touches said contact area and thereby adds body capacitance to said stray capacitance; said input circuit means connected to said lead means, and including variable capacitance means; means for adjusting the value of said capacitance such that said input circuit means does not generate said control signal when only said stray capacitance is associated with said conductive lead, and for rendering said input circuit means responsive to the presence of said body capacitance at said contact surface to generate said control signal, said controlled device being responsive to said control signal.

2.    The apparatus of claim 1 wherein said controlled device is a lamp including a filament, for illuminating a work area for said instrument, and further including circuit means for periodically energizing said input circuit means, said input circuit means generating a periodic control signal in the presence of said body capacitance; re-triggerable output circuit means for generating an output signal to said controlled device in response to said periodic control signal, said re-triggerable output circuit means having a delay off time greater than the period of the signal energizing said input circuit means for continuously energizing said controlled device in the event contact between said body and said contact area is momentarily interrupted.

3.    The apparatus of claim 2 wherein said circuit means for periodically energizing said input circuit means receives a 60 Hz line signal and generates said periodic signal near zero crossings thereof to reduce radio frequency interference.

4. The apparatus of claim 2 wherein said input circuit means includes a switching element including an input control lead and energized by said periodic signal; said variable capacitance being connected to said control lead and to the source of periodic input signal; said capacitance cable being coupled to said control lead.

5. The apparatus of claim 3 further comprising a coupling capacitor and limit resist or between said contact lead and said control terminal of said switching element.

6. The apparatus of claim 1 further comprising a remote control unit including switch means for varying the intensity of said lamp and accessible to said person, said capacitive switching circuit being connected in circuit with said control switch for energizing said filament in accordance with the state of said control switch to thereby vary the intensity of said lamp.

7. The apparatus of claim 1 wherein said instrument is a medical or dental handpiece and said controlled device is a source of light, said handpiece being coupled to a flexible cord, said conductive lead means extending along said cord, said system further including fiber optic bundle means communicating light from said source along said cord to said handpiece to illuminate an area adjacent the distal end of said handpiece.

0017318

1/2

Fig.1.

Fig.2.

Fig.4.

Fig.5.

Fig.3.

Fig.6.

Fig.7.

# EUROPEAN SEARCH REPORT

Application number

EP 80 30 0394

| | DOCUMENTS CONSIDERED TO·BE RELEVANT | | CLASSIFICATION OF THE APPLICATION (Int. Cl.3) |
|---|---|---|---|
| Category | Citation of document with indication, where appropriate, of relevant passages | Relevant to claim | |
| X | DE - A1 - 2 712 734 (MEDTRONIC MEDIZI-NISCH-ELEKTRONISCHE GERÄTEGESELL-SCHAFT MBH) <br> * claims 1, 2, 4; page 8, line 28 to page 9, line 5; page 7, lines 13 to 23; page 8, lines 10 to 16; fig. 1 * <br> --- | 1 | H 03 K 17/96 <br> A 61 C 1/00 <br> H 05 B 37/02 |
| A,P | EP - A1 - 0 002 922 (STAR DENTAL MANU-FACTURING CO. INC.) <br> * complete document * <br> --- | 2 | |
| A | DE - B2 - 2 630 944 (MASTER SPECIALTIES) <br> * column 5, lines 23 to 41; column 6, line 60 to column 7, line 21; fig. 2 and 3 * <br> --- | 2 | **TECHNICAL FIELDS SEARCHED (Int.Cl.3)** <br><br> A 61 C 1/00 <br> H 03 K 17/96 <br> H 05 B 37/02 |
| A | DE - A1 - 2 430 110 (BROWN,BOVERI & CIE) <br> * claims 1, 2; fig. 1, 2 * <br> --- | 2 | |
| A | GB - A - 1 383 132 (MAGIC DOT INC.) <br> * complete document * <br> --- | 2,3 | |
| A | US - A - 3 778 769 (J.C.T. HONG et al.) <br> * complete document * <br> ---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X | The present search report has been drawn up for all claims

| Place of search | Date of completion of the search | Examiner |
|---|---|---|
| Berlin | 23-05-1980 | ARENDT |

EPO Form 1503.1 06.78